# EUROPEAN PATENT APPLICATION

(11) **EP 4 534 727 A1**
(43) Date of publication of application: **09.04.2025**
(21) Application number: 23201744.2
(22) Date of filing: 05.10.2023
(51) Int. Cl.: C25B 1/04, C25B 9/05, C25B 9/19, C25B 9/60, C25B 9/63, C25B 9/73, C25B 9/77

(54) **TIGHTENING APPARATUS, ELECTROLYSER, METHOD OF CLOSING/OPENING ADJACENT ELECTROLYSIS CELLS, METHOD OF RETROACTIVELY APPLYING TIGHTENING APPARATUS**

(71) Applicant: thyssenkrupp nucera AG & Co. KGaA, 44141 Dortmund (DE)
(72) Inventor: Hamada, Tsuyoshi, Okayama, 706-0134 (JP); Kawanishi, Koji, Okayama, 706-0134 (JP); Iguchi, Yukinori, Okayama, 706-0134 (JP); Tanaka, Masato, Okayama, 706-0134 (JP)
(74) Representative: Meissner Bolte Partnerschaft mbB

(57) **Abstract**

The present invention relates to a tightening apparatus for selectively opening and closing respective adjacent electrolysis cells in an electrolyser. The tightening apparatus comprises: a movable member moveable in a first direction and a second direction, the first direction being a direction in which the cells are to be closed each other and the second direction being an opposite direction to the first direction; at least one actuator configured to move the movable member selectively in the first and second directions; a pressure plate arranged on the first direction side with respect to the movable member; and a spacer arranged between the pressure plate and the movable member.

## Description

### Technical Field

The invention relates to a tightening apparatus for selectively opening and closing adjacent electrolysis cells arranged in series in an electrolyser. The invention also relates to an electrolyser comprising a plurality of electrolysis cells arranged in series and such a tightening apparatus. The invention further relates to a method of closing/opening the adjacent electrolysis cells using the tightening apparatus. Furthermore, the invention relates to a method of retroactively applying the tightening apparatus to an existing filter press type electrolyser.

### Background

In recent years, there has been a significant increase in interest in using hydrogen as a secondary energy carrier. Among other things, this increased interest is based on the advantages of hydrogen: Hydrogen can be easily produced from water using renewable primary energy, hydrogen is a non-toxic material with a relatively high mass-related energy density, and the chemical energy stored in hydrogen can be easily converted back into electrical energy without releasing significant amounts of carbon dioxide or other greenhouse gases. In addition, hydrogen can also be used as an educt in various chemical processes. One important way of producing hydrogen is by electrolysis of water using an electrolysis cell that comprises a cathode compartment and an anode compartment. In this process hydrogen is generated in the cathode compartment of the electrolysis cell from alkaline aqueous solution, from acidic aqueous solution, or from neutral aqueous solution. The cathode compartment and the anode compartment are typically separated from each other by a separator such as a membrane or diaphragm. In many applications, alkaline water electrolysis in particular has proved to be a most promising process.

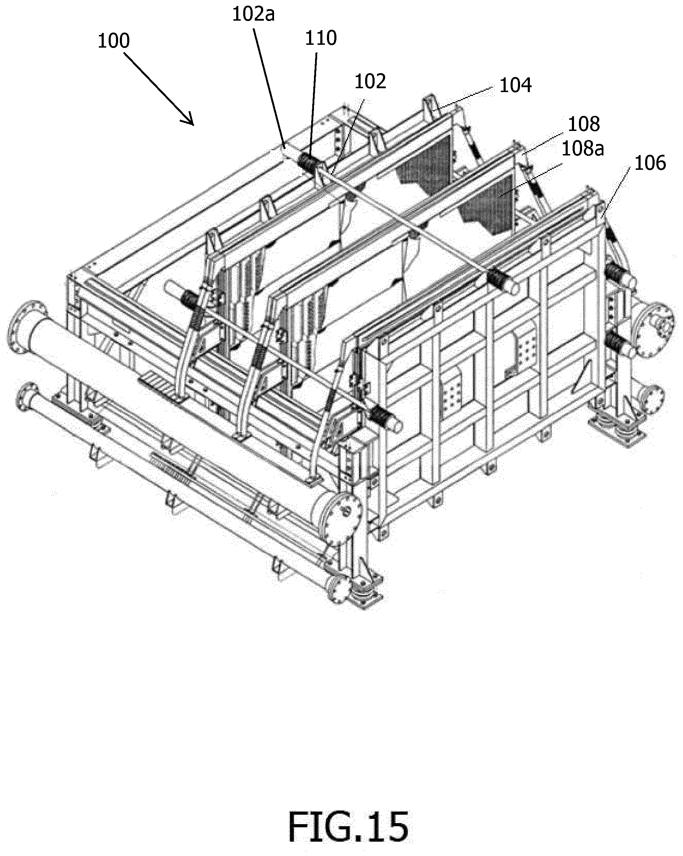

Electrolysers for such a process are known comprising a plurality of electrolysis unit cells (referred to simply as "cells" or "elements") arranged in series. Each cell defines an anode chamber and a cathode chamber, which are physically divided by a partition wall within the cell. Separators, such as ion exchange membranes or diaphragms, are arranged between the respective adjacent cells to electrochemically separate the anode chamber and the cathode chamber from each other. In order to establish a seal between the adjacent cells, gaskets or the like are arranged on the opposite sides of each cell, and the cells are tightened against each other in the cell stacking direction with aid of a tightening apparatus according to a filter press technology. A particular electrolyser of the filter press type is described in EP 0505899 A1, wherein a plurality of unit cells are stacked in series through a cation exchange membrane disposed between respective adjacent unit cells. Currently, either a tie-rod tightening system or hydraulic tightening system is available. As shown in FIG. 15, the tie-rod tightening system 100 comprises a plurality of tie rods 102 extends between a pressure plate 104 and a support plate 106 at both ends of the electrolysers and over a plurality of unit cells 108 each having a membrane 108a, and tightening nuts 102a attached to the both ends of the tie rods 102. Belleville springs or washer springs 110 are also provided between the outer walls of the pressure/support plates 104, 106 and the tightening nuts 102a.

EP4137610 A1 discloses an oil pressure tightening device comprising an oil pressure cylinder, a shut-off valve, a relief valve, an oil tank and a pump. JP 2021195596 A teaches that stack pressure for bipolar electrolysis elements is controlled by a hydraulic control mechanism.

These conventional systems have drawbacks. The tie-rod tightening systems as shown FIG. 15, due to the long tie-rods, require significant labour for manual tightening. The hydraulic tightening systems require a large cylinder with a sufficient extension length to successfully cope with a reduced number of cells. For example, if the number of cells is reduced to meet production targets or other requirements, the pressure plate needs to be pushed out farther. This not only requires more installation space for the long cylinder, but also leads to higher costs. Also, continuous compression by the hydraulic cylinder is necessary. Further, a hydraulic accumulator should be installed in case of inability to maintain the pressure in the cylinder due to a power failure or the like.

Therefore, it is the task of the present invention to eliminate one or more of the above disadvantages.

### Summary

According to the present invention, a tightening apparatus for selectively opening and closing respective adjacent electrolysis cells arranged in series in an electrolyser is provided. The tightening apparatus comprises: a movable member moveable in a first direction and a second direction, the first direction being a direction in which the cells are to be closed each other and the second direction being an opposite direction to the first direction; at least one actuator configured to move the movable member selectively in the first and second directions; a pressure plate arranged on the first direction side with respect to the movable member; and a spacer arranged between the pressure plate and the movable member.

Multi-step movements of the pressure plate by means of the spacer(s) and the actuator(s) enables the compression of the respective adjacent cells by the actuator, whilst avoiding a significant increase in size of the electrolyser, compared to a conventional, single-stage hydraulic actuator system. The spacer may be selectively activated and deactivated. In the first step of the pressure plate movement in the first direction (i.e., cell closing direction), the spacer is not activated. In the second step of the pressure plate movement in the first direction, the spacer is activated so that the pressure plate moves in the first direction by the sum of the moving distance of the movable plate in the first direction and the length of the spacer. It should be noted that the tightening apparatus according to the present invention may comprise two or more spacers arranged in tandem with each other in the first direction so as to provide three (or more)-step movements of the pressure plate. Additionally or alternatively, the moving distance of the pressure plate in the first direction may vary by adjusting the length of the spacer.

Moreover, the invented tightening apparatus significantly reduces the labour load compared to the conventional tie-rod tightening system.

The present invention also provides an electrolyser comprising: a plurality of electrolysis cells arranged in series; and the invented tightening apparatus, which is configured to apply pressure between the respective adjacent electrolysis cells.
Further, the present invention provides a method of closing respective adjacent electrolysis cells in an electrolyser, using the invented tightening apparatus. The method comprises: moving the pressure plate and the movable member in the first direction with an aid of the at least one actuator; moving the movable member in the second direction using the at least one actuator so that a space is created between the pressure plate and the movable member; interconnecting the pressure plate and the movable member with the spacer to hold the created space; and tightening the respective adjacent electrolysis cells by moving the pressure plate in the first direction along with the movable plate via the spacer therebetween with an aid of the at least one actuator.
Further, the present invention provides a method of opening adjacent electrolysis cells in an electrolyser, using the invented tightening apparatus. The method comprises: interconnecting the pressure plate and at least one electrolysis cell with each other; moving the movable member in the second direction along with the pressure plate and the least one electrolysis cell connected thereto using the at least one actuator; releasing or deactivating the spacer between the pressure plate and the movable member; moving the movable member in the first direction into contact with the pressure plate; interconnecting the pressure plate and the movable member; and moving the pressure plate along with the movable member in the second direction using the at least one actuator.

Furthermore, the present invention provides a method of retroactively applying the invented tightening apparatus to an existing filter press type electrolyser that comprises an existing frame and an existing pressure plate. The method comprises: extending the frame; and mounting a main body of the at least one actuator on the extended frame section.

Further embodiments are given in the dependent claims.

### Brief Description of the Drawings

FIG. 1 shows part of a bipolar electrolyser comprising a plurality of electrolysis cells;
FIG. 2 shows a schematic diagram of a tightening apparatus in planer view according to the present invention;
FIGS. 3A and 3B show an exemplary transmission means;
FIGS. 4A and 4B show another exemplary transmission means;
FIG. 5 shows a comparison between a conventional hydraulic tightening apparatus and the tightening apparatus according to the present invention;
FIGS. 6-9 and FIG. 2 show cell "close" procedures using the tightening apparatus according to the present invention;
FIGS. 10-14 show cell "partially open" procedures using the tightening apparatus according to the present invention; and
FIG. 15 shows an electrolyser having a conventional tie-rods tightening system.

### Detailed Description

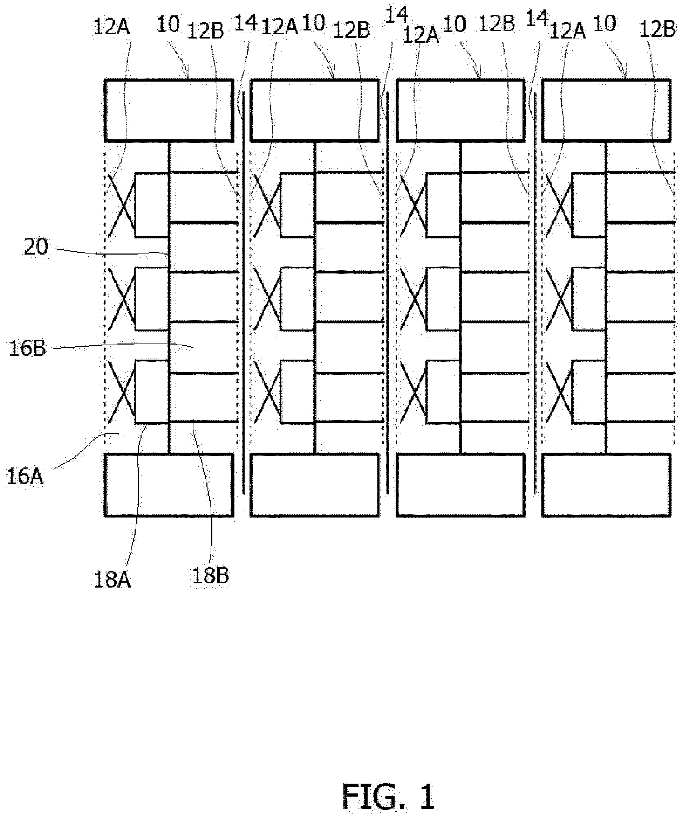

One exemplary electrolyser to which the invented tightening apparatus may be applied is a bipolar electrolyser, such as ion-exchange membrane process electrolyser, in which a plurality of bipolar electrolysis cells are arranged in series, with an ion exchange membrane or diaphragm as a gas separator being interposed between the respective adjacent cells (FIG. 1). The filter press technology is utilized to join the adjacent cells so that there is substantially no gap between electrode elements on both sides of the separator. However, the electrolyser may be a monopolar electrolyser in which each cell has either a cathode or anode electrode element on the side (not shown).

The electrolyser in which the invented tightening apparatus is applied may be used for Chlor-Alkali electrolysis. In another example, the electrolyser may be used for alkaline water electrolysis (AWE). More generally, the electrolyser may be applicable to any electrolysis process using a plurality of unit cells arranged in series, with an electrochemical separator being interposed between the respective adjacent unit cells.

An electrochemical electrode structure may be defined as comprising a current collector and at least one electrode element, the at least one electrode element being a two-dimensionally extended electrically conductive element having an open structure. The term "current collector" refers to the electrical connection between the active material of the electrode element and an external circuit, which may thus cover electrically conductive part of a rear wall/partition wall of the respective electrolysis cell as well as to any supportive structure protruding therefrom. The "open structure" means a structure having one or more openings penetrating from one side to the other side of the electrode element.

Referring now to FIG. 1, a plurality of electrolysis unit cells 10, which are arranged in series, can be seen. Each cell 10 may comprise a first electrode element 12A (e.g., cathode), a second electrode element 12B (e.g., anode). Gas separators 14 are interposed between the respective adjacent cells 10. The electrolysis cell 10 may further comprise a first compartment 16A, a second compartment 16B and current collectors 18A, 18B. The current collectors 18A, 18B may also be referred as part of electrode structures. The first and second compartments 16A, 16B are physically divided from each other by a rear wall or partition wall 20. The partition wall 20 faces the separators 14 over the first and second compartments 16A, 16B, and define these compartments together with the separators 14.

Each separator 14 has a first surface side and a second surface side, wherein the first surface side contacts the first compartment 16A and the second surface side contacts the second compartment 16B for electrochemically interconnecting the first compartment 16A and the second compartment 16B of the adjacent cells 10. The separator 14 may be ion-exchange membrane. Alternatively, the separator 14 may be porous diaphragm, particularly an ion-permeable diaphragm. Ion-permeable diaphragms do not allow gases generated by the electrochemical reaction to permeate, but have ion-exchange function. The separator 14 may be a polymeric porous membrane, inorganic porous membrane, woven or nonwoven fabrics, or the like. It should be noted that the electrolyser described above is merely an example, and the tightening apparatus of the present invention is applicable to any electrolysers using filter press technology.

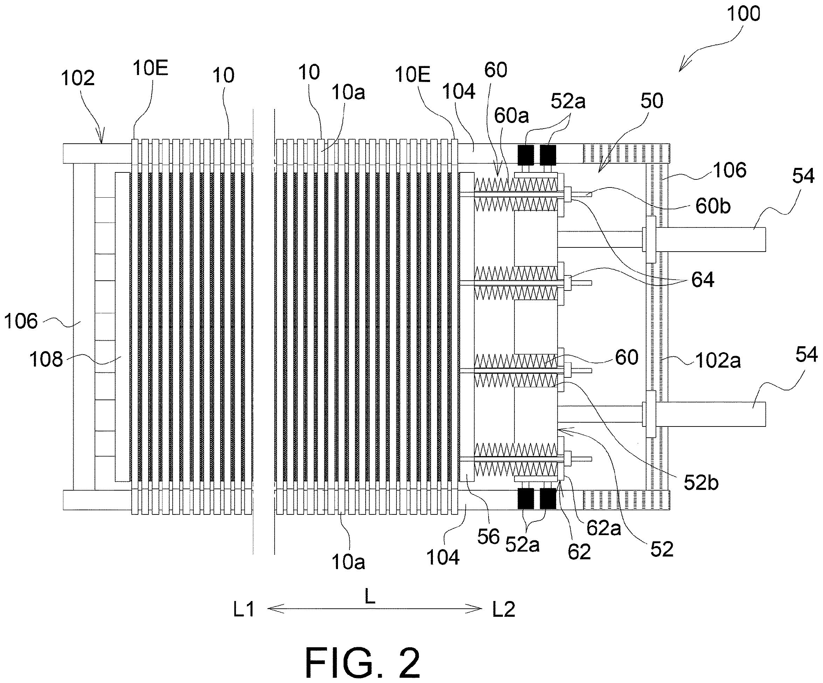

Referring now to FIG. 2, an electrolyser 100 having an exemplary tightening apparatus 50 according to the present invention can be seen in planer view. A plurality of electrolysis cells 10 such as illustrated in FIG. 1 can been seen. These cells 10 are stacked in series, e.g., in the longitudinal direction L of the electrolyser 100.

The electrolyser 100 comprises a frame 102 for supporting the electrolysis cells 10. The frame 102 may include a pair of guide rails 104 extending in the stacking direction L of the cells 10 to support the respective cells 10. In planar view of FIG. 2, it can be seen that the cells 10 are suspended between the pair of guide rails 104. Additional guide means may also be provided.

In the illustrated example, the frame 102 includes four pillars (not shown). Each guide rail 104 spans between the front pillar and the rear pillar in the stacking direction L. Preferably, each cell 10 includes a pair of rolling elements 10a on its sides so that the cell 10 can move or slide on the guide rails 104 with low friction. The guide rails 104 may also support some components of the tightening apparatus 50 as discussed later.

The frame 102 may further include two or more beams or lateral bars 106. The lateral bar 106 on the front side may span between the front pillars. Likewise, the lateral bar 106 on the rear side may span between the rear pillars. A support plate 108 is provided to receive pressure from the terminal cell 10E at the distal end of the electrolyser 100. The support plate 108 is attached to the frame, e.g., the rear bar 106.

In one example, the frame 102 of an existing tie rod tightening system can be reused. This can also be seen from FIG. 2. The front section 102a where a dot pattern is drawn is added to the existing frame. This newly added frame section 102a may also constitute part of the guide rails 104.

The tightening apparatus 50 includes a movable member 52, at least one (two in this example) actuator 54, a pressure plate 56, and one or more spacers. Preferably, each spacer may comprise a compressible means 60.

The movable member 52 is arranged between the pressure plate 56 and the at least one actuator 54. The movable member 52 is configured to move in the first and second directions L1, L2 with an aid of the at least one actuator 54. The movable member 52 may move or slide on the guide rails 104. In this case, the movable member 52 may include rolling elements 52a on its sides that roll on the guide rails 104. The movable member 52 may have a plurality of openings 52b through which the spacers (the compressible means 60) extend.

The actuator 54 is configured to move the movable member 52 selectively in the first and second directions L1, L2. Various actuators, such as hydraulic cylinders, electro-mechanical actuators, pneumatic actuators, are applicable. In this example, a hydraulic cylinder is used as the actuator 54. The tightening apparatus 50 comprises all necessary equipment for the actuator(s) 54 to work properly. For example, the hydraulic cylinders require a hydraulic circuit that comprises a reservoir, pump, relief valve, 3-way or 4-way directional control valve, connectors, hydraulic lines, controller and the like. The electro-mechanical actuators require electric motors, power supply, transmissions, controller and the like.

The pressure plate 56 is arranged on the first direction L1 side with respect to the movable member 52. The pressure plate 56 is configured to apply pressure against the terminal cell 10E at the proximal end of the electrolyser 100. The pressure plate 56 may additionally be supported and guided by the frame 102.

The one or more spacers (e.g., the compressible means 60) are arranged between the pressure plate 56 and the movable member 52. The function of each spacer may selectively activated and deactivated. To this end, the spacers may be arranged to be in line with the respective openings 52b of the movable member 52 in the direction L. When the spacers are deactivated, the proximal end (the end on the second direction L2 side) of each spacer freely passes through the opening 52b of the movable member 52. In order to activate the spacers, the proximal end of each spacer is engaged with, or connected to, the movable member 52. The spacer(s) may have a rigid body that does not substantially deform due to external pressure from actuator 54.

In a preferable embodiment, however, each spacer comprises the compressible means 60. The compressible means 60 are arranged between the pressure plate 56 and the movable member 52. Each compressible means 60 is compressible by the movable member 52 with an aid of the at least one actuator 54 so as to accumulate pressure and apply in turn said pressure to the pressure plate 56. The compressible means 60 may comprise a spring, preferably a belleville spring 60a. Each belleville spring 60a is guided by a centre rod 60b. The centre rod 60b extends from the pressure plate 56 in the second direction L2. The centre rods 60b align with the openings 52b of the movable plate 52 viewed in the direction L. When reusing an existing tie rod tightening system, the compressible means 60 may be placed at the same location where the existing tie rods were located. Preferably, the plurality of compressible means 60 may be distributed substantially evenly around the perimeter of the pressure plate 56. More preferably, one or more compressible means 60 are positioned on the outside near the seals (e.g., gaskets) between the cells 10, viewed in the stacking direction L of the cells 10.

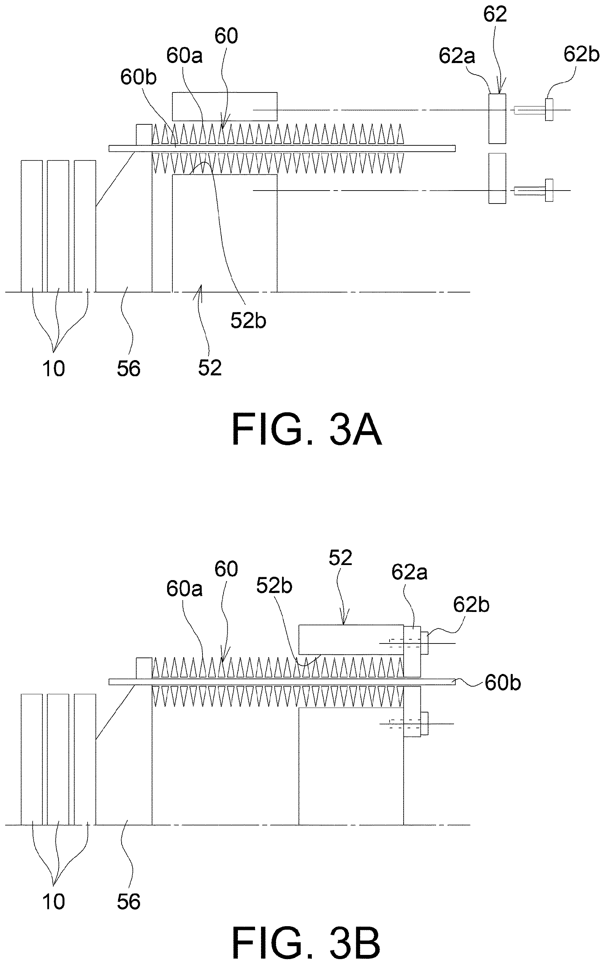

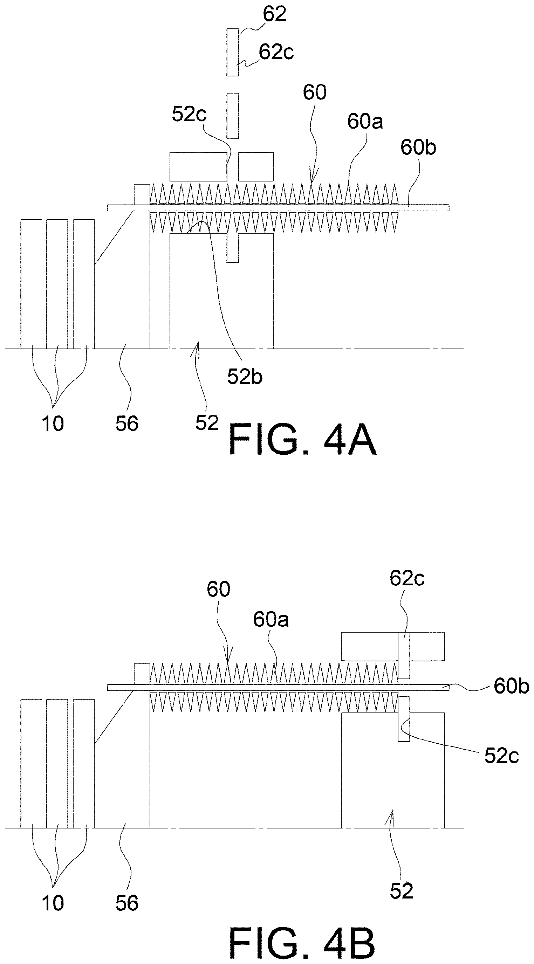

The tightening apparatus 50 may further comprise a transmission means 62. The transmission means 62 is configured to transmit force from the movable member 52 to the spacers (e.g., the compressible means 60). Stated another way, the transmission means 62 selectively activates and deactivates the function of the spacer. For example, the proximal end of each spacer may be (at least indirectly) connected to the movable member 52 via the transmission means 52 so that the spacer is activated between the pressure plate 56 and the movable member 52. Preferably, the transmission means 62 is detachably attached to the movable member 52. In one example, as shown in FIGS. 3A and 3B, the transmission means 62 includes a backing plate 62a secured on the front surface of the movable member 52 by fasteners 62b such as bolts so as to receive the compressible means 60 passing through the openings 52b of the movable member 52. The backing plate 62a include holes through which only the centre rods 60b of the compressible means 60 pass. By releasing the fasteners 62b, the transmission means 62 can be detached from the movable member 52. In another example, as shown in FIGS. 4A and 4B, the transmission means 62 is in the form of an insert plate 62c that can be inserted into a slot 52c formed in the movable member 52. The insert plate 62c also include holes through which only the centre rods 60b of the compressible means 60 pass. Although not shown, the transmission means 62 is not limited to the form of plate, but may have any structure that can withstand the load form the compressible means 60 and the actuators 54.

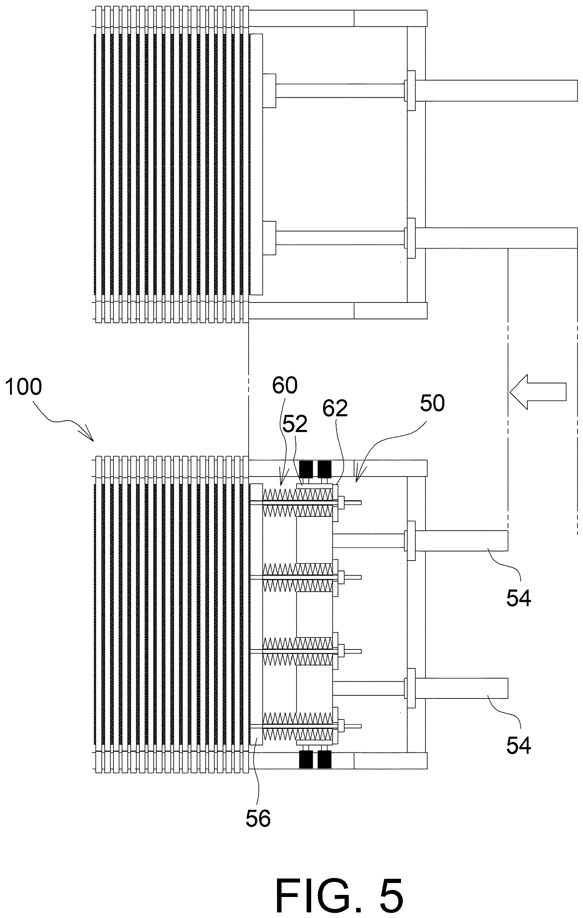

With the multi-step movements (two-step movements in this example) of the pressure plate 56 according to the present invention, the working length of the actuator 54 can significantly be shortened compared to the conventional, single-stage movement of the pressure plate. This is clear from FIG. 5. The upper image in this figure shows a conventional hydraulic tightening apparatus that moves the pressure plate directly with the actuator, i.e., without the spacers. In contrast, the lower image in the figure shows the hydraulic tightening apparatus 50 according to the invention, in which the pressure plate 56 is moved by the actuators 54 with the spacers (e.g., the compressible means 60) being interposed between the pressure plate 56 and the movable plate 52. The present invention obviously reduces the length of the actuators 54, allowing significant space saving on the front side of the electrolysis 100. Furthermore.

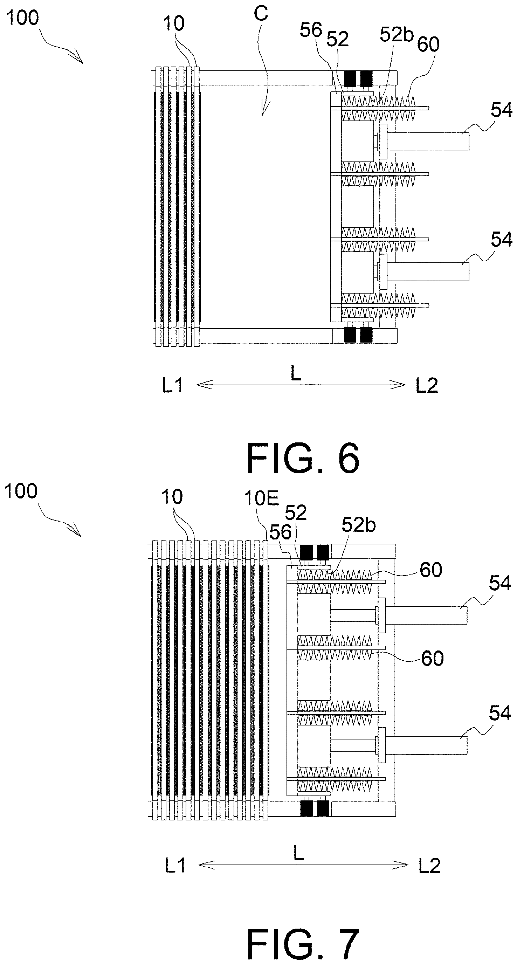

Referring now to FIGS. 6-9 and FIG. 2, cell "close" procedures will be described. In FIG. 6, both the pressure plate 56 and the movable member 52 are in the retracted position in the second direction L2. There may be a clearance C between the pressure plate 56 and the frontmost cell for further cell installation. The proximal ends of the compressible means 60 thereby protrude from the openings 52b of the movable member 52 in the second direction L2.

In FIG. 7 some additional cells 10 are installed into the clearance C, for example from above the electrolyser 100. The pressure plate 56 is then moved halfway by the actuators 54 towards the proximal or frontmost cell 10E.

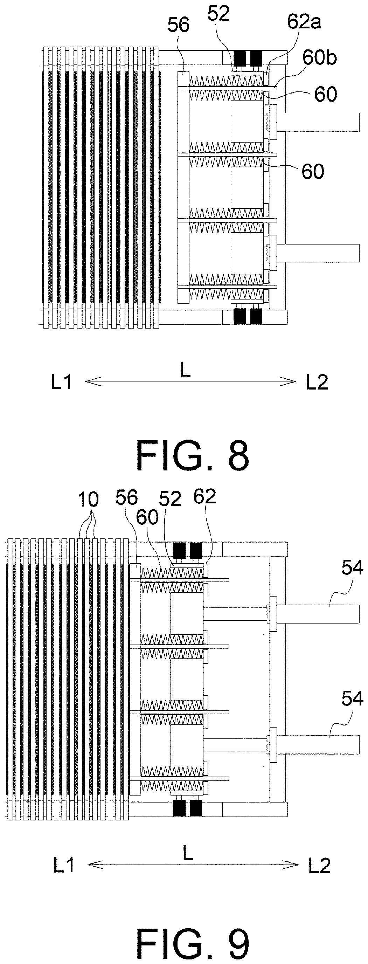

In FIG. 8, the pressure plate 56 is moved back in the second direction L2 by the actuators 54, preferably until the proximal ends of the compressible means 60 (i.e., springs 60a) no longer protrude from the openings 52b of the movable member 52. The backing plate 62a as the transmission means 62 is attached to the movable member 52 so that the backing plate 62a receives the proximal ends of the compressible means 60. In other words, the spacers are activated. The centre rods 60b of the compressible means 60 protrude from the holes provided in the backing plates 62a.

In FIG. 9, the movable member 52 is moved again in the first direction L1. Since the compressible means 60 are activated through the attachment of transmission means 62, the movable member 52 pushes the pressure plate 56 with the compressible means 60 being interposed therebetween whilst compressing the compressible means 60 with the aid of the actuators 54. Each actuator 54 may be configured to stop moving the movable member 52 when a predetermined pressure is applied between the respective adjacent cells 10. If the actuator 54 is composed of a hydraulic cylinder, this can be detected through the cylinder pressure. Alternatively or additionally, one or more pressure sensors may be provided on the pressure plate 56 and/or the support plate 108.

As shown in FIG. 2, locking means (e.g., nuts) 64 on the respective centre rods 60b of the compressible means 60 are tightened to retain the compressible means 60 accumulating the pressure. It is preferable that the locking means 64 are attached before compressing the compressible means 60, because if the locking means 64 are attached after compressing the compressible means 60, compressible means 60 may expand due to the decrease in thickness of the gasket used in the cell unit over time. The main function of locking means 64 are to retain the compressible means 60, especially in the opening procedure.

Since the pressure generated from the actuators 54 is first accumulated in the compressible means 60 and then applied to the pressure plate 56, good sealing is ensured even if the gaskets between the cells 10 are deformed due to aging or the like. In other words, there is no need for the actuators 54 to periodically compensate for potential decrease in inter-cell distance. In contrast, the conventional hydraulic tightening systems may require periodic adjustments by the hydraulic cylinders to compensate for the decreased inter-cell distance due to aging of gaskets or the like.

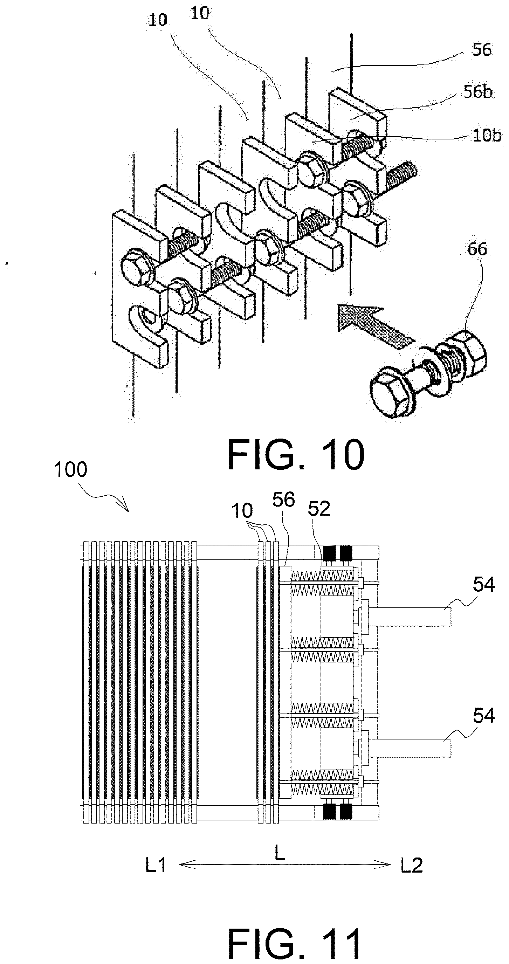

Referring to FIGS. 10 to 14, cell "partially open" procedures will be described. In FIG. 10, the pressure plate 56 and at least one electrolysis cell 10 are interconnected with each other by any means. In one example, each cell 10 and the pressure plate 56 are provided with lugs 10b, 56b on which fasteners 66, such as bolts and nuts, can be attached. Alternatively, bundles may be used to bundle the pressure plate 56 and some cells 10 together (not shown).

In FIG. 11, the movable member 52 is moved in the second direction L2 along with the pressure plate 56 and some cells 10 connected thereto using the actuators 54. This partially opens the electrolyser 100 to create a clearance C, allowing replacement or addition of electrolysis cells 10.

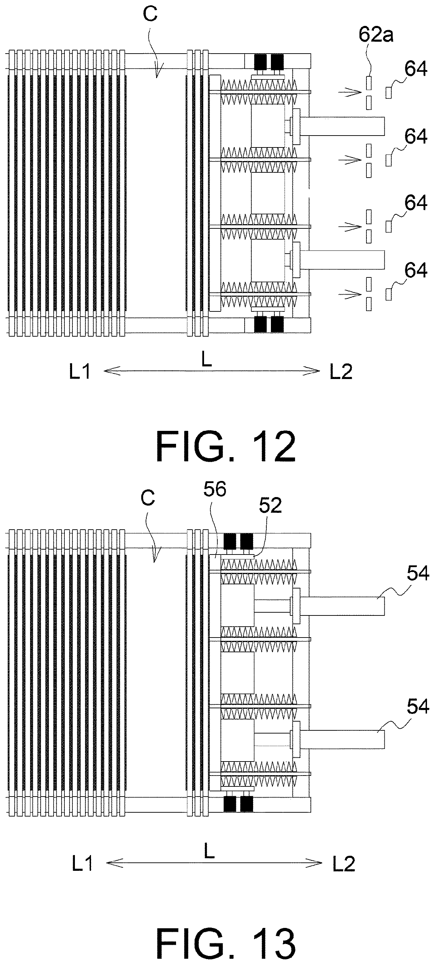

In FIG. 12, the locking means 64 and the backing plate 62a are removed. The proximal end of the each compressible means 60 is no longer received by the movable member 52 via the transmission means 56. In other words, the spacers are deactivated.

In FIG. 13, the movable member 52 is moved in the first direction L1 by the actuator 54 into contact with the pressure plate 56. The movable member 52 and the pressure plate 56 are then interconnected by any mechanical and/or electromagnetic coupling means (not shown). The mechanical and/or electromagnetic coupling means is configured to detachably interconnect the pressure plate 56 and the movable member 52. The mechanical coupling means may include one or more fasteners such as bolts.

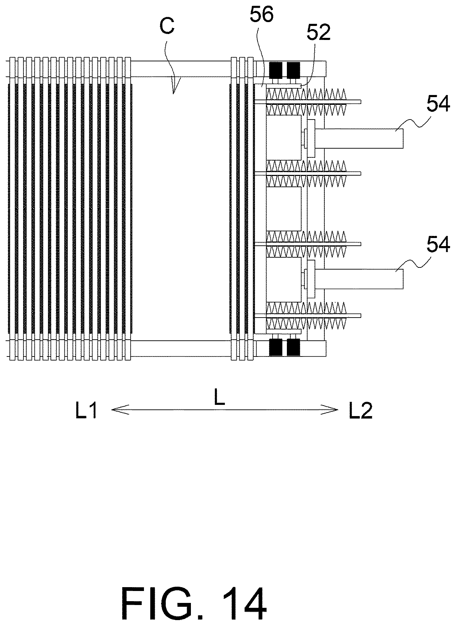

In FIG. 14, the pressure plate 56 is moved back further in the second direction L2 using the actuators 54. This creates further clearance C between the partially opened cells 10.

According to an embodiment of the present invention, a method of retroactively applying the tightening apparatus 50 according to the present invention to an existing filter press type electrolyser is provided. The existing electolyser comprises an existing frame and an existing pressure plate. The method comprises extending the frame (see, the section with dotted pattern in FIG. 2), and mounting the main body of the at least one actuator 54 on the extended frame section 102a. Preferably, the existing pressure plate is reused as the pressure plate 56 or the movable member 52 of the tightening apparatus 50 according to the present invention.

### Reference sign list

- 10: electrolysis cell
- 50: tightening apparatus
- 52: movable member
- 54: actuator
- 56: pressure plate
- 60: compressible means (spacer)
- 62: transmission means
- 64: locking means
- 100: electrolyser

## Claims

1. A tightening apparatus (50) for selectively opening and closing respective adjacent electrolysis cells (10) arranged in series in an electrolyser (100); comprising:
a movable member (52) moveable in a first direction (L1) and a second direction (L2), the first direction (L1) being a direction in which the cells (10) are to be closed each other and the second direction (L2) being an opposite direction to the first direction (L1);
at least one actuator (54) configured to move the movable member (52) selectively in the first and second directions (L1, L2);
a pressure plate (56) arranged on the first direction (L1) side with respect to the movable member (52); and
a spacer arranged between the pressure plate (56) and the movable member (52).

2. The tightening apparatus (50) according to claim 1, wherein the spacer comprises a compressible means (60),
wherein the compressible means (60) is compressible by the movable member (52) with an aid of the at least one actuator (54) so as to accumulate pressure and apply in turn said pressure to the pressure plate (56).

3. The tightening apparatus (50) according to claim 2, wherein the compressible means (60) comprises a spring, preferably a belleville spring (60a).

4. The tightening apparatus (50) according to claim 2 or 3, further comprising a locking means (64) for retaining the compressible means (60) in an opening procedure.

5. The tightening apparatus (50) according to any one of claims 1 to 4, further comprising a transmission means (62) configured to transmit force from the movable member (52) to the spacer,
preferably, wherein the transmission means (62) is detachably attached to the movable member (52).

6. The tightening apparatus (50) according to any one of claims 1 to 5, wherein the at least one actuator (54) comprises a hydraulic cylinder (54).

7. The tightening apparatus (50) according to any one of claims 1 to 6, comprising two actuators (54).

8. An electrolyser (100), comprising:
a plurality of electrolysis cells (10) arranged in series; and
a tightening apparatus (50) according to any one of claims 1 to 7, configured to apply pressure between the respective adjacent electrolysis cells (10).

9. The electrolyser (100) according to claim 8, wherein the electrolysis cells (10) are bipolar electrolysis cells,
preferably, wherein the electrolyser (100) is a zero-gap electrolyer in which an anode electrode and a cathode electrode are spatially separated only by a gas separator.

10. A method of closing respective adjacent electrolysis cells (10) in an electrolyser (100), using a tightening apparatus (50) according to any one of claims 1 to 7, comprising:
moving the pressure plate (56) and the movable member (52) in the first direction (L1) with an aid of the at least one actuator (54);
moving the movable member (52) in the second direction (L2) using the at least one actuator (54) so that a space is created between the pressure plate (56) and the movable member (52);
interconnecting the pressure plate (56) and the movable member (52) with the spacer to hold the created space; and
tightening the respective adjacent electrolysis cells (10) by moving the pressure plate (56) in the first direction (L1) along with the movable plate (52) via the spacer therebetween with an aid of the at least one actuator (54).

11. The method according to claim 10, wherein the moving the pressure plate (56) including moving the pressure plate (56) to a position where the pressure plate (56) contacts, but does not pressurise, a proximity cell of the electrolysis cells (10).

12. The method according to claim 10 or 11, wherein the spacer comprises a compressible means (60),
wherein the tightening the respective adjacent electrolysis cells (10) including moving the movable member (52) in the first direction (L1) using the at least one actuator (54) whilst compressing the compressible means (60) such that the compressible means (60) accumulates pressure and apply in turn said pressure to the pressure plate (56),
preferably, the method further comprises retaining the compressible means (60) in its compressed state.

13. A method of opening adjacent electrolysis cells (10) in an electrolyser (100), using a tightening apparatus (50) according to any one of claims 1 to 7, comprising:
interconnecting the pressure plate (56) and at least one electrolysis cell (10) with each other;
moving the movable member (52) in the second direction (L2) along with the pressure plate (56) and the least one electrolysis cell (10) connected thereto using the at least one actuator (54);
releasing or deactivating the spacer between the pressure plate (56) and the movable member (52);
moving the movable member (52) in the first direction (L1) into contact with the pressure plate (56);
interconnecting the pressure plate (56) and the movable member (52); and
moving the pressure plate (56) along with the movable member (52) in the second direction (L2) using the at least one actuator (54).

14. A method of retroactively applying a tightening apparatus (50) according to any one of claims 1 to 7 to an existing filter press type electrolyser comprising an existing frame and an existing pressure plate, comprising:
extending the frame; and
mounting a main body of the at least one actuator (54) on the extended frame section.

15. The method according to claim 14, wherein
the existing pressure plate is reused as the pressure plate (56) or the movable member (52) as recited in any one claims 1 to 7.
